Europäisches Patentamt

European Patent Office

Office européen des brevets

(19)

(11) Publication number: **0 394 454**

**A1**

## (12) EUROPEAN PATENT APPLICATION
### published in accordance with Art. 158(3) EPC

(21) Application number: **89903807.9**

(22) Date of filing: **23.03.89**

(86) International application number:
**PCT/JP89/00310**

(87) International publication number:
**WO 89/10236 (02.11.89 89/26)**

(51) Int. Cl.⁵: **B23Q 15/00**

(30) Priority: **28.04.88 JP 107355/88**

(43) Date of publication of application:
**31.10.90 Bulletin 90/44**

(84) Designated Contracting States:
**DE FR GB**

(71) Applicant: **FANUC LTD.**
**3580, Shibokusa, Aza Komanba, Oshinomura**
**Minamitsuru-gun, Yamanashi 401-05(JP)**

(72) Inventor: **MIYATA, Mitsuto**
**2-2-4, Nanyodai Hachioji-shi**
**Tokyo 192-03(JP)**
Inventor: **MATSUMURA, Teruyuki**
**38-8, Matsugaya Hachioji-shi**
**Tokyo 192-03(JP)**
Inventor: **MINESHIGE, Takahiko Seiko Denshi**
**Kogyo Takatsuka**
**Dokushinryo A-346 620-4, Takatsukashinden**
**Matsudo-shi Chiba 271(JP)**

(74) Representative: **Jackson, Peter Arthur et al**
**Gill Jennings & Every 53-64 Chancery Lane**
**GB-London WC2A 1HN(GB)**

(54) **SURFACE NOTCHING.**

(57) This invention relates to a method for surface notching with a combination lathe. A finishing allowance (TC) and a work passage (15) spaced apart from a work passage by an offset quantity (R) are calculated to execute rough working (2) and thereafter the finishing allowance (TC) is finished with the same tool. In this manner the surface notching can be accomplished with a high accuracy.

FIG. 1 (a)

F I G. 1 (b)

1a

-1-

# D E S C R I P T I O N

## FACE CUTTING METHOD

### TECHNICAL FIELD

The present invention relates to a face cutting method applied to a complex lathe operated by automatic programming, and more specifically, to a face cutting method whereby a finishing allowance is taken into consideration.

### BACKGROUND ART

A complex lathe operated by automatic programming can automatically and continuously carry out a plurality of operations such as turning, drilling, milling and the like by controlling an X-axis, a Z-axis and a C-axis of the lathe.

A face cut can be carried out by milling using the X- and C-axes of the above axes whereby, conventionally, the final configuration of a part is cut by a single operation to thereby provide a required configuration.

The cutting of the final configuration by a single operation, however, requires a large cutting amount, and thus the cutting accuracy is lowered by the deflection of a tool post and the like, the cut surface is rough and the cutting accuracy cannot be improved.

### DISCLOSURE OF THE INVENTION

Taking the above into consideration, an object of the present invention is to provide a face cutting method which provides an improved cutting accuracy by dividing a cutting operation into two processes, a rough cut and a finish cut.

To solve the above problem, in accordance with the present invention, there is provided a face cutting method applied to a complex lathe, comprising the steps of carrying out a rough cut by calculating a cutting path along which a tool is moved other than a cutting configuration by a finishing amount and an offset amount, and finish cutting the finishing amount by the tool after the rough cut is completed.

Since the cutting process is divided into the two processes, a rough cut and a finish cut, and optimum cutting conditions are set for the respective processes, the cutting accuracy is improved when the finish cut is carried out.

### BRIEF DESCRIPTION OF THE DRAWINGS

Figure 1 is a conceptual diagram of an embodiment of a face cutting method according to the present invention;

Figure 2 is a flowchart of a face cutting method according to the present invention; and

Figure 3 is a diagram of an embodiment of the arrangement of hardware of a numerical control apparatus for a complex lathe according to the present invention.

BEST MODE OF CARRYING OUT THE INVENTION

An embodiment of the present invention will be described below with reference to drawings.

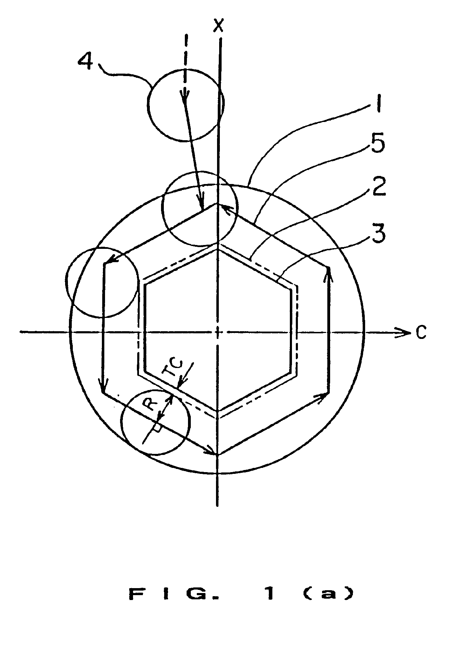

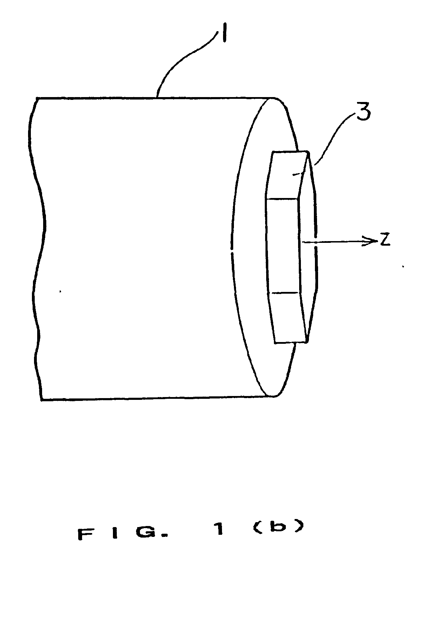

Figures. 1(a) and 1(b) are conceptual diagrams of an embodiment of a face cutting method according to the present invention, wherein an end of a cylindrical workpiece is face cut to form a hexagonal column having a prescribed height by milling using X- and C-axes of the complex lathe.

Figure 1(a) is a front view of a raw material, as seen from one end thereof, and shows the workpiece and the path along which the tool is moved when the workpiece is rough cut. In Figure 1(a), 1 designates the outside configuration of the workpiece, 2 designates the configuration of the workpiece after rough cutting, 3 designates the configuration thereof after finish cutting, 4 designates the outside configuration of the blade of a cylindrical tool, 5 designates the path along which the center of the tool is moved when the rough cut is carried out, R designates the radius of the tool, and TC designates the dimension of a finishing allowance.

Figure 1(b) is a perspective view of the workpiece after finish cutting.

The face cutting method according to the present invention will be described. In the creation of an NC program, after an actual finishing configuration is created as a cutting program, it is determined whether the rough cutting is to be carried out. More specifically, it is determined that whether a finishing allowance value is input. When the finishing allowance value is input, the cutting conditions for the rough cut are set. Since the accuracy of the surface to be cut is not restricted in this process, optimum cutting conditions can be set by taking only a cutting amount and a cutting time into consideration. Next, the amount of offset of a tool center is determined. In this case, the amount of offset is the sum of the radius R of the tool and the finishing amount TC, and is calculated as the sum of a half of the diameter of the tool and the finishing amount TC, since tools are generally classified according to the outside dimension thereof. Therefore, the initially created cutting program is corrected by this offset amount, and output, and then the rough cut is carried out.

When the rough cut is completed, the finish cut conditions are set, and since only a small amount is to be cut in this process, these cutting conditions must be set such that an improvement of the cut surface is obtained.

Next, an offset amount is calculated which, in this case, is only a half of the tool diameter, and then the path along which the tool center is moved is determined by correcting the cutting program initially created by this offset amount, and the finish cut is carried out.

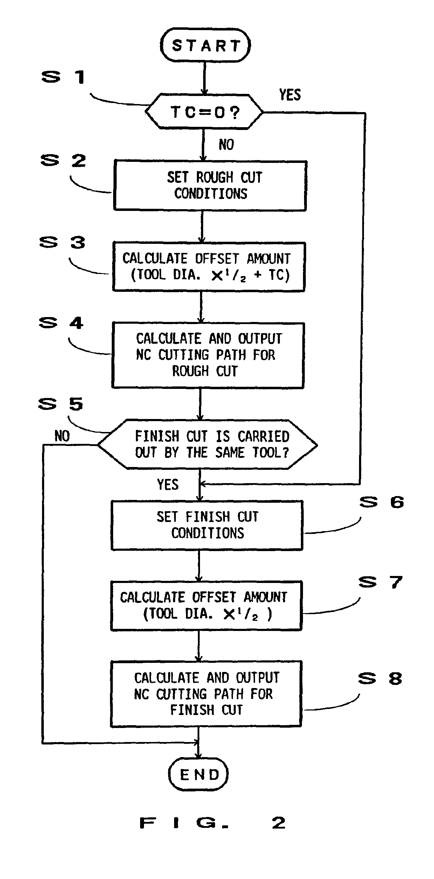

Figure 2 is a flowchart of the face cutting method according to the present invention, wherein numerals prefixed with an "S" indicate the numbers of steps of the process.

At step S1, it is determined whether or not the finishing allowance TC is zero. If this allowance is zero, the flow goes to step S6, and if it is not zero, the flow goes to step 2, where the rough cut conditions are set. Then, at step S3, the sum of a half of the tool diameter and the finishing allowance TC, i.e., the amount of offset in the rough cut, is calculated. The flow then goes to step S4, where the rough cut path is calculated and output, and then at step S5, it is determined whether the finish cut must be carried out by the same tool. If the finish cut must be carried out by the same tool, the flow goes to step S6, but if this cut must not to be carried out by the same tool, the flow is terminated. At step S6, the finish cut conditions are set, and the flow goes to step S7, where a half of the tool diameter is calculated. The flow then goes to step 8, where the finish cut path is calculated and output.

Since the workpiece is cut by a cutting operation divided into a rough cut and a finish cut, as described above, the finish cut can be carried out under the optimum cutting conditions and thus the accuracy of the cutting of the finished surface is improved.

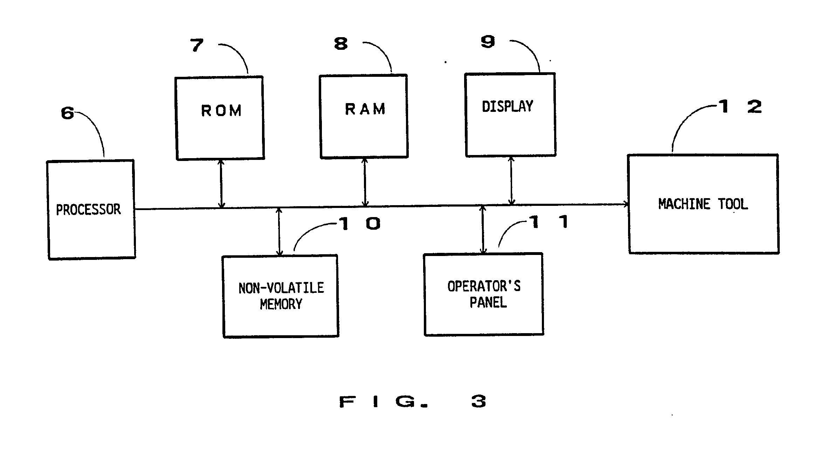

Figure 3 is a diagram of the arrangement of hardware of a numerical control apparatus for a complex lathe as an embodiment of the present invention, wherein 6 designates a processor, 7 designates a ROM storing a control program for controlling the complex lathe, 8 designates a RAM, 9 designates an display, 10 designates a non-volatile memory for storing cutting programs, parameters, pitch error correction amounts and the like, 11 designates an operator's panel, and 12 designates a machine tool.

Note, an axis control circuit, a servo amplifier, a spindle control circuit, a spindle amplifier and the like are not shown in Figure 3. Further, two or more processors can be used, to provide a multi-processor system.

Although the machining program is created by the numerical control apparatus in the above description, the machining program also can be created in the same manner by an automatic program creation device. In addition, although the rough and finish cuts are carried out by the same tool, in the above description, they can be carried out by different tools but, in this case, the offset amount and the like must be calculated separately.

-7-

As described above, according to the present invention, since the cutting operation is divided into two processes, a rough cut and a finish cut, the cutting operation can be carried out under the optimum conditions for the respective processes, and as a result, the accuracy of the cut surface can be improved when the finish cut is carried out.

-8-

## CLAIMS

1.  A face cutting method in a complex lathe, comprising the steps of:

carrying out a rough cut by calculating a cutting path along which a tool is moved other than a cutting configuration by a finishing amount and an offset amount;
and

finish cutting said finishing amount by said tool after said rough cut is completed.

2.  A face cutting method according to claim 1, wherein a cutting operation is carried out by controlling an X-axis and a C-axis of said complex lathe.

3.  A face cutting method according to claim 1, wherein a hexagonal column is cut at the end of a cylindrical workpiece.

F I G.    1 (a)

F I G. 1 (b)

START

S 1

TC=0 ?

YES

NO

S 2

SET ROUGH CUT CONDITIONS

S 3

CALCULATE OFFSET AMOUNT (TOOL DIA. $\times^1/_2$ + TC)

S 4

CALCULATE AND OUTPUT NC CUTTING PATH FOR ROUGH CUT

S 5

NO

FINISH CUT IS CARRIED OUT BY THE SAME TOOL?

YES

SET FINISH CUT CONDITIONS

S 6

CALCULATE OFFSET AMOUNT (TOOL DIA. $\times^1/_2$ )

S 7

CALCULATE AND OUTPUT NC CUTTING PATH FOR FINISH CUT

S 8

END

F I G.   2

F I G. 3

EP 0 394 454 A1

# INTERNATIONAL SEARCH REPORT

International Application No  PCT/JP89/00310

**I. CLASSIFICATION OF SUBJECT MATTER** (if several classification symbols apply, indicate all) 6

According to International Patent Classification (IPC) or to both National Classification and IPC

Int. Cl$^4$    B29Q15/00

**II. FIELDS SEARCHED**

Minimum Documentation Searched 7

| Classification System | Classification Symbols |
|---|---|
| IPC : | B23Q15/00 |

Documentation Searched other than Minimum Documentation
to the Extent that such Documents are Included in the Fields Searched 8

| | |
|---|---|
| Jitsuyo Shinan Koho | 1970 - 1988 |
| Kokai Jitsuyo Shinan Koho | 1970 - 1988 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| X | JP, A, 57-96752 (Daihatsu Motor Co., Ltd.) 16 June 1982 (16. 06. 82) (Family: none) | 1-3 |

* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance: the claimed invention cannot be considered novel or cannot be considered to involve an inventive step

"Y"  document of particular relevance: the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| April 4, 1989 (04. 04. 89) | April 17, 1989 (17. 04. 89) |

| International Searching Authority | Signature of Authorized Officer |
|---|---|
| Japanese Patent Office | |

Form PCT ISA/210 (second sheet) (January 1985)